# EUROPÄISCHE PATENTSCHRIFT

(11) **EP 2 611 560 B1**
(45) Veröffentlichungstag und Bekanntmachung des Hinweises auf die Patenterteilung: **17.01.2018**
(21) Anmeldenummer: 11740554.8
(22) Anmeldetag: 01.07.2011
(51) Int. Cl.: B22F 3/11, B22F 5/08, B21H 5/02, F16H 55/16, F16H 55/06, B22F 3/16

(54) **GESINTERTES ZAHNRAD**
SINTERED GEARWHEEL
ROUE DENTÉE FRITTÉE

(30) Priorität: 31.08.2010 AT 14542010
(43) Veröffentlichungstag der Anmeldung: 10.07.2013
(73) Patentinhaber: Miba Sinter Austria GmbH, 4663 Laakirchen (AT)
(72) Erfinder: MÜLLER, Alexander, A-4813 Altmünster (AT); RÖßLER, Horst, A-4631 Krenglbach (AT); SANDNER, Christian, A-4810 Gmunden (AT)
(74) Vertreter: Patentanwaltskanzlei Hübscher
(86) Internationale Anmeldenummer: PCT/AT2011/000289
(87) Internationale Veröffentlichungsnummer: WO 2012/027761

(56) Entgegenhaltungen:
- WO-A1-2009/025660
- US-B2- 7 556 864

## Beschreibung

Die Erfindung bezieht sich auf ein gesintertes Zahnrad mit Zähnen, die im Flanken- und im Fußbereich eine im Übergangabschnitt zwischen dem Flanken- und dem Fußbereich stetig durchgehende, verdichtete Oberflächenschicht mit einer Restporosität kleiner als 10 % aufweisen.

Um eine höhere Dauerbiegefestigkeit im Bereich der Zahnfüße und eine höhere Verschleißfestigkeit im Bereich der Zahnflanken bei pulvermetallurgisch hergestellten, gesinterten Zahnrädern zu erzielen, ist es bekannt (EP 0 552 272 B1), die gesinterten Pulvermetallrohlinge der Zahnräder im Flanken- und im Fußbereich der Zähne zu verdichten, sodass eine weitgehend porenfreie Oberflächenschicht erhalten wird, die im Eingriffsbereich des Zahnrads eine erhebliche Steigerung der zulässigen Belastbarkeit mit sich bringt. In diesem Zusammenhang ist es bekannt (US 5 884 527 A), die eine Restporosität von höchstens 10 % aufweisende verdichtete Oberflächenschicht in einer Dicke von 380 bis 1000 µm auszubilden. Es wurde aber auch schon vorgeschlagen (US 7 556 864 B2), die verdichtete Oberflächenschicht im Flanken- und im Fußbereich der Zähne unterschiedlich dick auszubilden. Mit einer verdichteten Oberflächenschicht im Flankenbereich zwischen 500 und 1000 µm, die stetig in eine verdichtete Oberflächenschicht mit einer Dicke von 10 bis 300 µm im Fußbereich der Zähne übergeht, soll einerseits den auftretenden Belastungen entsprochen und anderseits eine Geräuschminderung erzielt werden.

Miteinander kämmende Zahnräder werden aufgrund der Kraftübertragung im Fußbereich der Zähne auf Biegung beansprucht, wobei die größten Spannungen im Übergangsabschnitt zwischen dem Fuß- und dem Flankenbereich auftreten und ihr Maximum an der Zahnoberfläche erreichen. Um bei größeren Belastungen diese Biegespannungen aufnehmen zu können, wurde im Übergangsabschnitt zwischen dem Flanken- und dem Fußbereich eine verdichtete Oberflächenschicht mit einer ausreichenden Dicke eingesetzt, doch hat sich in der Praxis gezeigt, dass trotz einer dickeren Oberflächenschicht im Bereich der größten Biegespannungen die Gefahr einer Werkstoffüberlastung nicht ausgeschlossen werden kann.

Der Erfindung liegt somit die Aufgabe zugrunde, ein gesintertes Zahnrad der eingangs geschilderten Art so auszugestalten, dass dessen Belastbarkeit erheblich gesteigert werden kann.

Die Erfindung löst die gestellte Aufgabe dadurch, dass die verdichtete Oberflächenschicht im Übergangsabschnitt zwischen dem Flanken- und dem Fußbereich mit einer geringeren Dicke als in den anschließenden Flanken- und Fußbereichen ausgebildet ist und dass die Dicke der verdichteten Oberflächenschicht (9) im Übergangsabschnitt (4) zwischen dem Flanken- und dem Fußbereich (2, 3) höchstens 280 µm beträgt.

Zum Herstellen von gesinterten Zahnrädern mit Zähnen, die eine verdichtete Oberflächenschicht im Flanken- und Fußbereich aufweisen, werden Pulvermetallrohlinge mit einem der zu verdichtenden Oberflächenschicht entsprechenden Aufmaß gesintert und dann mit Hilfe eines Drückerwerkzeugs, das eine Gegenverzahnung bildet, unter einer Verdichtung der Oberflächenschicht im Bereich des Aufmaßes auf das Sollmaß kalibriert. Beim abwälzenden Eingreifen der Gegenverzahnung des Drückerwerkzeugs in die Verzahnung des gesinterten Pulvermetallrohlings kommt es vorwiegend im Übergangsabschnitt zwischen dem Flanken- und dem Fußbereich der Zähne zu einem Eindringen der Zahnspitzen der Gegenverzahnung des Drückerwerkzeugs in den gesinterten Pulvermetallrohling, was mit einem sehr hohen Umformungsgrad verbunden ist, der Werkstoffdefekte, wie Werkstoffschuppungen und Werkstoffdopplungen, nach sich ziehen kann. Durch eine Verringerung der Dicke des Aufmaßes des gesinterten Pulvermetallrohlings im Übergangsabschnitt zwischen dem Flanken- und Fußbereich der Zähne kann der durch die Bearbeitung mit dem Drückerwerkzeug bedingte Umformungsgrad auf ein Maß herabgesetzt werden, das zu keinen Werkstoffschuppungen bzw. Werkstoffdopplungen führt, die die Belastbarkeit des verdichteten Werkstoffs beeinträchtigen könnten. Aus diesem Grunde bringt eine geringere Dicke der verdichteten Oberflächenschicht im Übergangsabschnitt zwischen dem Flanken- und dem Fußbereich in überraschender Weise eine deutliche Steigerung der Belastbarkeit des gesinterten Zahnrads mit einer guten Zahnfußfestigkeit mit sich.

Wenn die Dicke der verdichteten Oberflächenschicht im Übergangsabschnitt zwischen dem Flanken- und dem Fußbereich höchstens 280 µ beträgt, kann eine Werkstoffschädigung während des oberflächenverdichtenden Kalibriervorgangs durch den abwälzenden Eingriff der Gegenverzahnung des Drückerwerkzeugs in die Zahnung des gesinterten Pulvermetallrohlings weitgehend ausgeschlossen werden.

In der Zeichnung ist der Erfindungsgegenstand beispielsweise dargestellt. Es zeigen
- Fig. 1: ein erfindungsgemäßes gesintertes Zahnrad ausschnittsweise im Bereich eines Zahnes in einem schematischen, achsnormalen Schnitt und
- Fig. 2: diesen Zahn ausschnittsweise im Übergangsabschnitt vom Flankenbereich zum Fußbereich in einem größeren Maßstab.

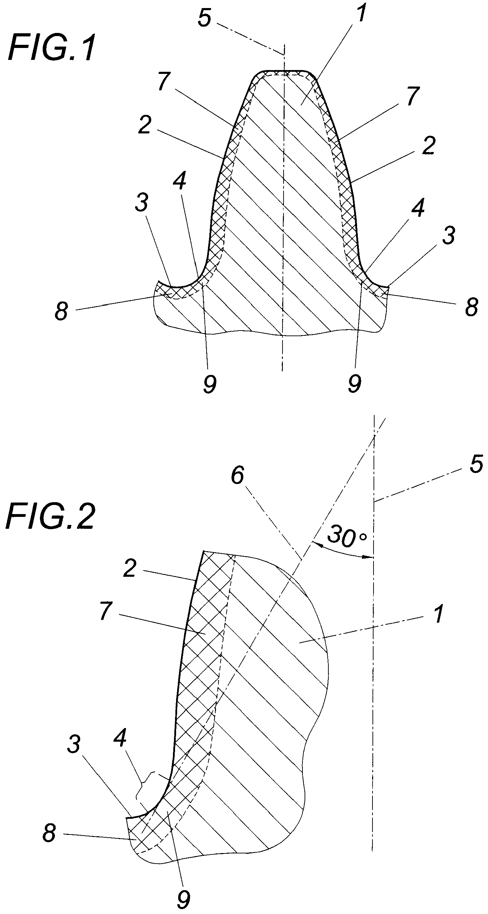

Der Zahn 1 eines nicht näher dargestellten, gesinterten Zahnrads bildet in herkömmlicher Weise einen Zahnflankenbereich 2 und einen Fußbereich 3 aus. Der Übergangsabschnitt zwischen diesen Bereichen 2 und 3 ist mit 4 bezeichnet und wird im Allgemeinen durch eine unter 30° gegenüber der Zahnachse 5 geneigten Tangente 6 an die Kontur des Zahns 1 bestimmt, wie dies der Fig. 2 entnommen werden kann.

Im Flanken- und Fußbereich 2, 3 des Zahns 1 ist eine verdichtete Oberflächenschicht vorgesehen, die im Zahnflankenbereich mit 7 und im Zahnfußbereich mit 8 bezeichnet ist, wobei sich im Übergangsabschnitt 4 eine stetig in die Oberflächenschichten 7, 8 übergehende Oberflächenschicht 9 ergibt. Diese verdichteten Oberflächenschichten 7, 8 und 9 weisen eine Restporosität kleiner 10 % auf, die gegen die Zahnoberfläche hin abnimmt, sodass im unmittelbaren Oberflächenbereich mit einem im Wesentlichen dichten Werkstoff gerechnet werden kann. Die verdichtete Oberflächenschicht 9 im Bereich des Übergangsabschnitts 4 weist eine im Vergleich zu den verdichteten Oberflächenschichten 7 und 8 des Flanken- und des Fußbereichs 2, 3 geringere Dicke auf, die kleiner als 280 µm ist. Die Dicke der verdichteten Oberflächenschicht 8 im Fußbereich 3 liegt vorzugsweise über 350 µm. Die verdichtete Oberflächenschicht 7 im Flankenbereich 2 kann in an sich bekannter Weise mit einer Dicke zwischen 500 und 1000 µm aber auch höher ausgebildet werden.

## Patentansprüche

1. Gesintertes Zahnrad mit Zähnen (1), die im Flanken- und im Fußbereich (2, 3) eine im Übergangabschnitt (4) zwischen dem Flanken- und dem Fußbereich (2, 3) stetig durchgehende, verdichtete Oberflächenschicht (7, 8, 9) mit einer Restporosität kleiner als 10 % aufweisen, **dadurch gekennzeichnet, dass** die verdichtete Oberflächenschicht (9) im Übergangsabschnitt (4) zwischen dem Flanken- und dem Fußbereich (2, 3) mit einer geringeren Dicke als in den anschließenden Flanken- und Fußbereichen (2, 3) ausgebildet ist und dass die Dicke der verdichteten Oberflächenschicht (9) im Übergangsabschnitt (4) zwischen dem Flanken- und dem Fußbereich (2, 3) höchstens 280 µm beträgt.

## Claims

1. Sintered gearwheel having teeth (1) which, in the flank and root regions (2, 3), comprise a compacted surface layer (7, 8, 9) which is completely continuous in the transition portion (4) between the flank and root regions (2, 3) and has a residual porosity of less than 10%, **characterised in that** the compacted surface layer (9) is formed with a smaller thickness in the transition portion (4) between the flank and root regions (2, 3) than in the adjoining flank and root regions (2, 3) and that the thickness of the compacted surface layer (9) in the transition portion (4) between the flank and the root regions (2, 3) is at most 280 µm.

## Revendications

1. Roue dentée frittée munie de dents (1) qui présentent dans la zone du flanc et du pied (2, 3) une couche de surface comprimée (7, 8, 9) s'étendant de manière continue et stable dans la section de transition (4) entre la zone du flanc et du pied (2, 3) et présentant une porosité résiduelle inférieure à 10 %, **caractérisée en ce que** la couche de surface comprimée (9) est réalisée, dans la section de transition (4), entre la zone du flanc et du pied (2, 3), avec une épaisseur inférieure à celle située dans les zones du flanc et du pied (2, 3) adjacentes et **en ce que** l'épaisseur de la couche de surface comprimée (9) est au maximum de 280 µm dans la section de transition (4) entre la zone du flanc et du pied (2, 3).
